# EUROPÄISCHE PATENTSCHRIFT

(11) **EP 1 314 919 B1**
(45) Veröffentlichungstag und Bekanntmachung des Hinweises auf die Patenterteilung: **01.09.2004**
(21) Anmeldenummer: 01127936.1
(22) Anmeldetag: 23.11.2001
(51) Int. Cl.: F16K 11/078

(54) **Armaturteil und Armatur**
Water faucet part and faucet
Partie d'un robinet et robinet

(43) Veröffentlichungstag der Anmeldung: 28.05.2003
(73) Patentinhaber: KWC AG, CH-5726 Unterkulm (CH)
(72) Erfinder: Lehner, Michael, 5502 Hunzenschwil (CH); Graber, Heinz, 5727 Oberkulm (CH)
(74) Vertreter: Patentanwälte Schaad, Balass, Menzl & Partner AG

(56) Entgegenhaltungen:
- DE-A- 3 243 750
- DE-U- 7 827 331
- US-A- 3 667 503
- US-A- 4 522 231

## Beschreibung

Die Erfindung betrifft ein Armaturteil für eine Armatur gemäss Anspruch 1 und eine Armatur mit einem solchen Armaturteil gemäss Anspruch 8.

Eine derartige Armatur ist z.B. dem Dokument DE-A-3 243 750 zu entnehmen.

Armaturen umfassen üblicherweise einen zum Anschluss einer Warmwasser- und einer Kaltwasserleitung geeigneten Grundkörper, wenigstens einen Wasserauslauf, und wenigstens ein Misch- und/oder Dosierelement. Als Mischund/oder Dosierelemente dienen bei einer Einhebelarmatur beispielsweise eine Mischpatrone und bei einer Zweihebelarmatur beispielsweise Ventile. Es sind Armaturen mit einer Vielzahl unterschiedlicher Erscheinungsformen und Funktionen bekannt, z.B. solche mit einem einzigen Wasserauslauf, mit zwei wahlweise benutzbaren Wasserausläufen oder mit einem Wasserauslauf, der einen ausziehbaren Schlauch, z.B. mit einem Brausenelement, umfasst. Je nach Funktionalität sind die Wege des warmen, kalten und gemischten Wassers im Inneren der Armatur unterschiedlich und fest vorgegeben. Das Wasser wird durch ein entsprechend gestaltetes Armaturteil, das mit den Warm- und Kaltwasserleitungen verbunden wird, zum Mischund Dosierelement hin bzw. davon weg geleitet. Beispielsweise erfolgt der Wasserzulauf von unten und Wasserablauf ausschliesslich nach oben. Es ist daher notwendig, eine Vielzahl verschiedener Armaturteile und daran angepasste weitere Bauteile, z.B. Dichtungen, Wasserauslaufteile, zu produzieren und auf Vorrat zu halten. Die Funktionalität einer einmal installierten Armatur kann nicht verändert werden. Dies ist unflexibel, fertigungstechnisch aufwendig und führt zu hohen Lagerkosten.

Der Erfindung liegt daher die Aufgabe zugrunde, eine Armatur sowie geeignete Mittel zum Aufbau derselben bereitzustellen, deren Funktion nicht von vornherein festgelegt ist, sondern den Bedürfnissen des Benutzers auf einfache Weise angepasst werden kann.

Die Aufgabe wird gelöst durch ein Armaturteil für eine Armatur mit den Merkmalen von Anspruch 1 und durch eine Armatur mit einem solchen Armaturteil gemäss Anspruch 8. Vorteilhafte Weiterbildungen ergeben sich aus den abhängigen Ansprüchen, der Beschreibung und den Zeichnungen.

Das erfindungsgemässe Armaturteil für eine Armatur ermöglicht unterschiedliche Funktionalitäten der Armatur ohne die Vornahme von konstruktiven Änderungen. Das Armaturteil weist wenigstens drei Kanäle auf, wobei der erste und der zweite Kanal jeweils von einer Öffnung im Bereich des unteren Endes des Armaturteils zu einer Öffnung seitlich am Armaturteil verlaufen. Mit "unten" bzw. "oben" ist jeweils die Einbaulage bezeichnet. Im eingebauten Zustand dient der erste bzw. zweite Kanal bei allen Armaturvarianten zum Leiten von kaltem bzw. warmem Wasser von der entsprechenden Anschlussleitung zum Mischund Dosierelement, z.B. einer Mischpatrone oder einem Ventil. Der dritte Kanal verläuft längs durch das Armaturteil von einer Öffnung im Bereich des unteren Endes zu einer Öffnung im Bereich des oberen Endes. Er weist wenigstens eine seitliche Abzweigung mit einer seitlichen Öffnung auf. Die Flussrichtung des Wassers durch den dritten Kanal wird durch geeignete separate Verschlusselemente individuell für jede Armatur festgelegt. Diese Verschlusselemente haben die Funktion, die obere und/oder untere Öffnung abzudichten. Die seitliche Öffnung ist im montierten Zustand vorzugsweise mit dem Misch- und Dosierelement verbunden und dient zumindest bei Einhebelmischarmaturen zum Einlass von Mischwasser in den dritten Kanal. Durch das universell verwendbare Armaturteil und die entsprechenden Verschlusselemente können mit wenigen Teilen eine Vielzahl unterschiedlicher Armaturen zusammengestellt werden. Die erfindungsgemässe modulare Armatur umfasst vorzugsweise noch wenigstens einen Wasserauslauf, bei mehreren Wasserausläufen geeignete Zwischen- oder Verlängerungsstücke, gegebenenfalls einen Schlauch für ein ausziehbares Brausenelement und geeignete Montagelemente zur Befestigung der Armatur in der Einsatzposition. Die Armatur kann als vom Hersteller zusammengestellter Bausatz verkauft oder vom Benutzer aus den entsprechenden Einzelteilen individuell zusammengestellt werden.

In einer Weiterbildung der Erfindung liegen zwei Grundtypen des Armaturteils vor: Ein Armaturteil für eine Einhebelmischarmatur hat ein seitlich angeformtes Aufnahmeelement für ein Misch- und Dosierelement, in das die drei Kanäle derart münden, dass Warm-und Kaltwasser dem Misch- und Dosierelement durch den ersten und zweiten Kanal zugeführt und Mischwasser durch den dritten Kanal abgeführt wird. Die drei Kanäle befinden sich daher vorzugsweise auf derselben Seite des Armaturteils. Ein Armaturteil für eine Zweihebelmischarmatur hat zwei seitlich angeformte Aufnahmeelemente für je ein Dosierelement. Das warme und kalte Wasser wird über den ersten bzw. zweiten Kanal zugeleitet und dosiert. Es wird über zwei weitere Kanäle abgeleitet und anschliessend ausserhalb des Armaturteils gemischt. Zum Ableiten des heissen bzw. kalten Wassers dient der dritte Kanal sowie ein weiterer Kanal oder ein fünfter und sechster Kanal, wobei der dritte Kanal funktionslos ist. Die Kanäle befinden sich in diesem Fall vorzugsweise auf gegenüberliegenden Seiten des Armaturteils. Mit diesen zwei Grundtypen lassen sich alle Armaturen aufbauen.

Vorzugsweise hat das Armaturteil einen durchgehenden vierten Kanal, der beispielsweise zum Leiten von Mischwasser nach oben dient, wenn das Mischwasser vom dritten Kanal nach unten abgegeben wurde. Dies ist insbesondere der Fall, wenn das Mischwasser in einem ausziehbaren Schlauch geleitet wird, der durch den vierten Kanal geführt ist. Der dritte und/oder vierte Kanal kann auch unbenutzt bleiben, z.B. im Fall eines Zweihebelmischers, bei dem das Wasser erst oberhalb des Armaturteils in einer Mischkammer gemischt wird. Der vierte Kanal dient vorzugsweise ausser zur Wasserleitung auch als "Rückgrat" der Armatur, indem er ein Innenrohr aufnimmt, mit welchem die weiteren Bauteile der Armatur verschraubt werden können.

Der erste und zweite Kanal kann ebenfalls durchgehend sein und gegebenenfalls am gewünschten Ende mit dem Verschlusselement verschlossen werden.

Für Spezialanwendungen, z.B. zum Leiten von Luft mit dem Zweck der Verhinderung von Unterdruck, für Elektronik oder für eine spezielle Trinkwasserleitung, können weitere Kanäle im Armaturteil vorhanden sein.

Beispiele für die Erfindung sind in den Zeichnungen dargestellt und nachfolgend beschrieben. Es zeigen rein schematisch:
- Fig. 1a-c: verschiedene Ansichten eines Armaturteils für eine Einhebelmischarmatur mit Auslauf;
- Fig. 2a-c: verschiedene Ansichten eines Armaturteils für eine Zweihebelmischarmatur mit Auslauf;
- Fig. 3a-c: verschiedene Ansichten eines Armaturteils für eine Einhebelmischarmatur mit einem ausziehbaren Schlauch;
- Fig. 4: einen Schnitt durch eine Einhebelmischarmatur mit einem erfindungsgemässen Armaturteil;
- Fig. 5: einen Schnitt durch eine Zweihebelmischarmatur mit einem erfindungsgemässen Armaturteil;
- Fig. 6: einen Schnitt durch eine weitere Einhebelmischarmatur mit einem Wasserauslauf in Form eines Rohrs;
- Fig. 7: einen Schnitt durch eine Einhebelmischarmatur mit einem ausziehbaren Schlauch.
- Fig. 8: ein erfindungsgemässes Dichtelement;
- Fig. 9: verschiedene Einzelkomponenten der erfindungsgemässen modularen Armatur.

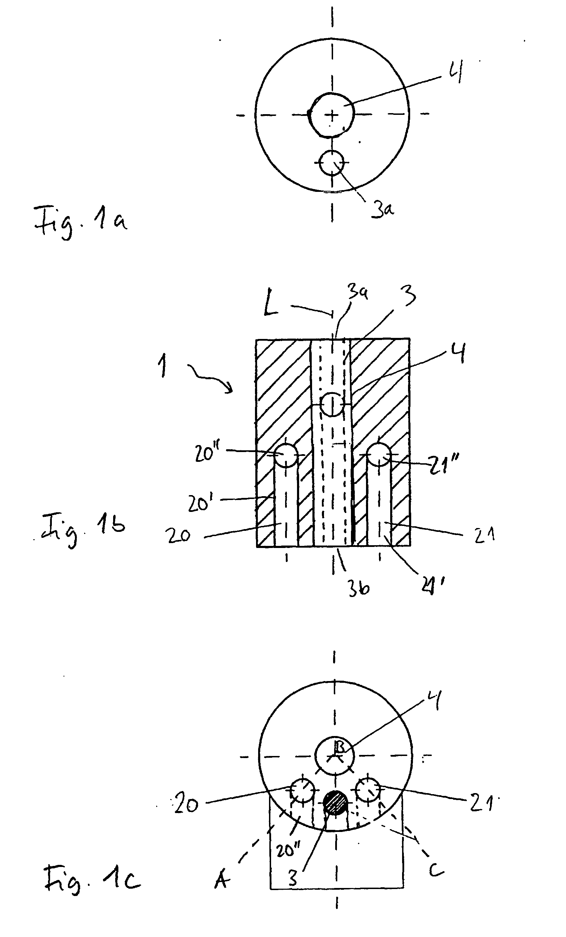

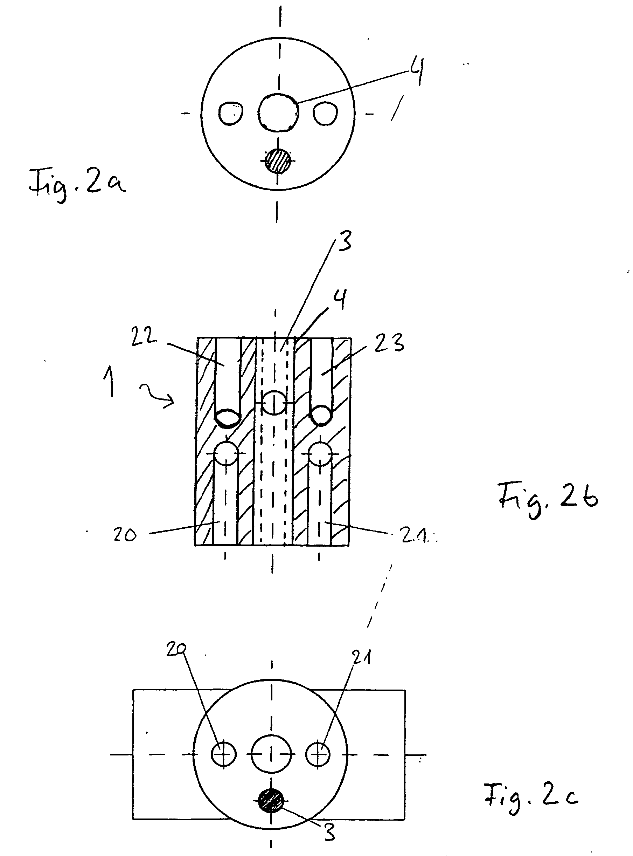

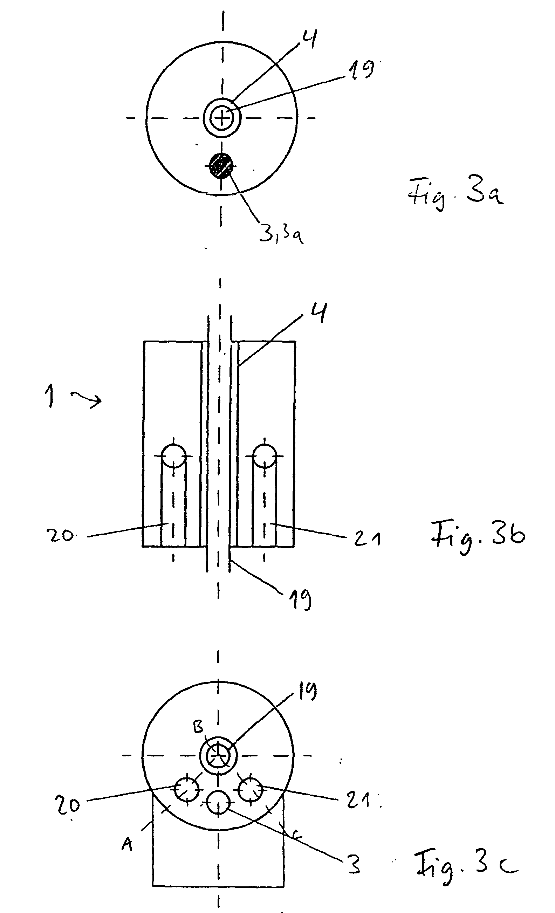

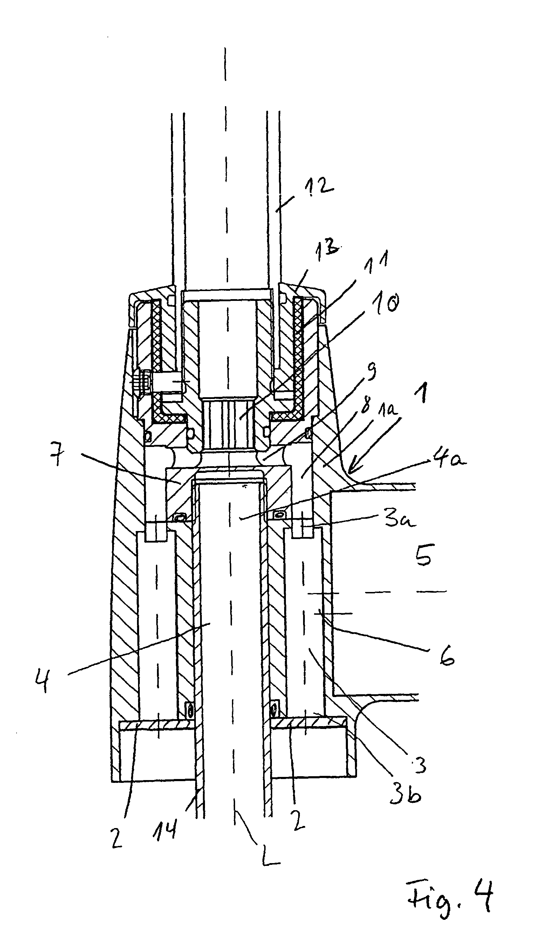

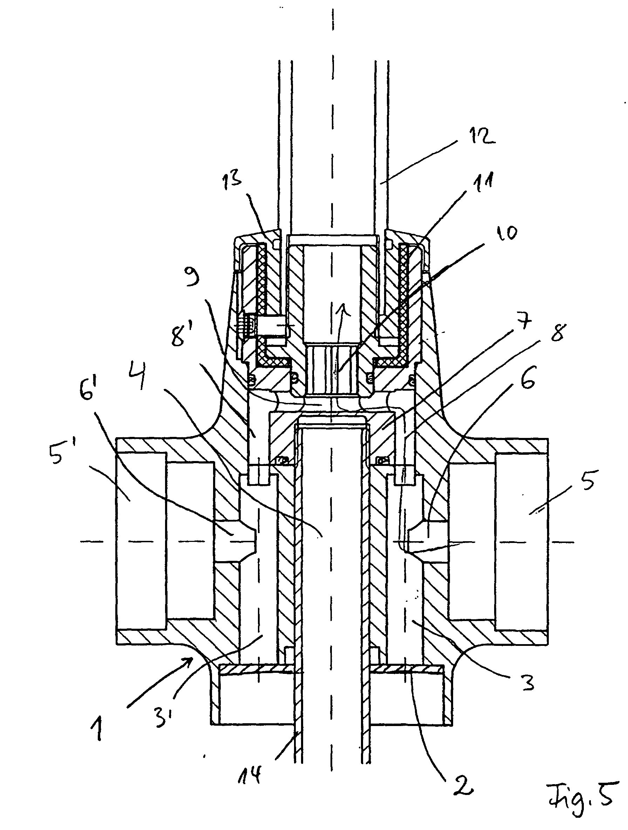

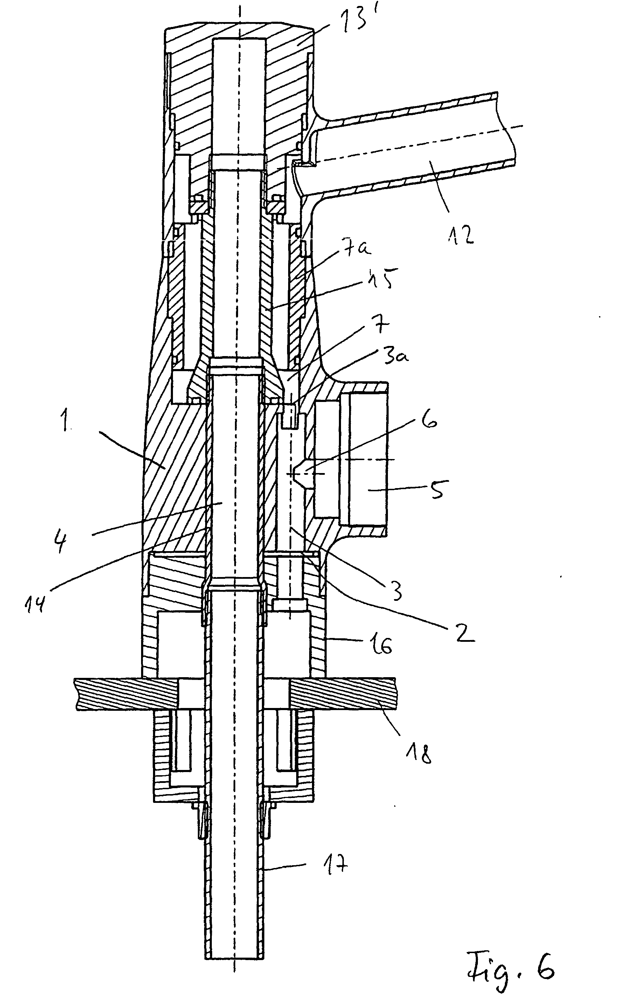

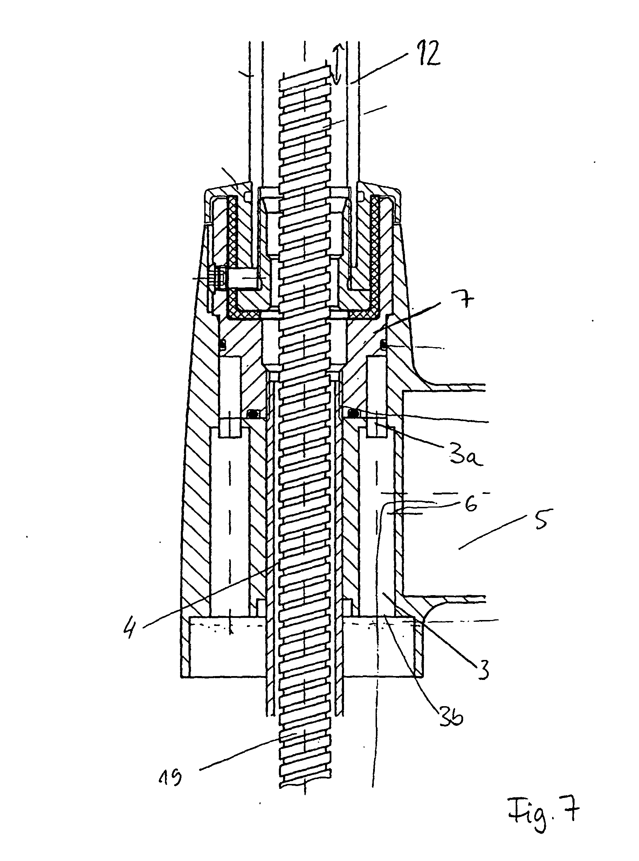

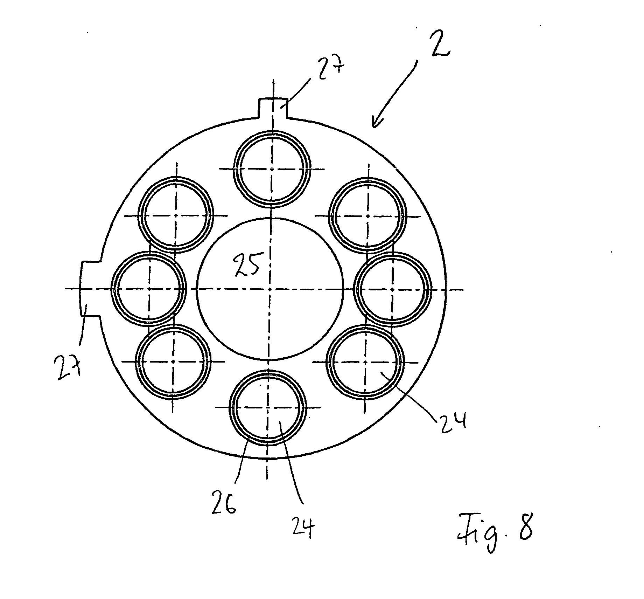

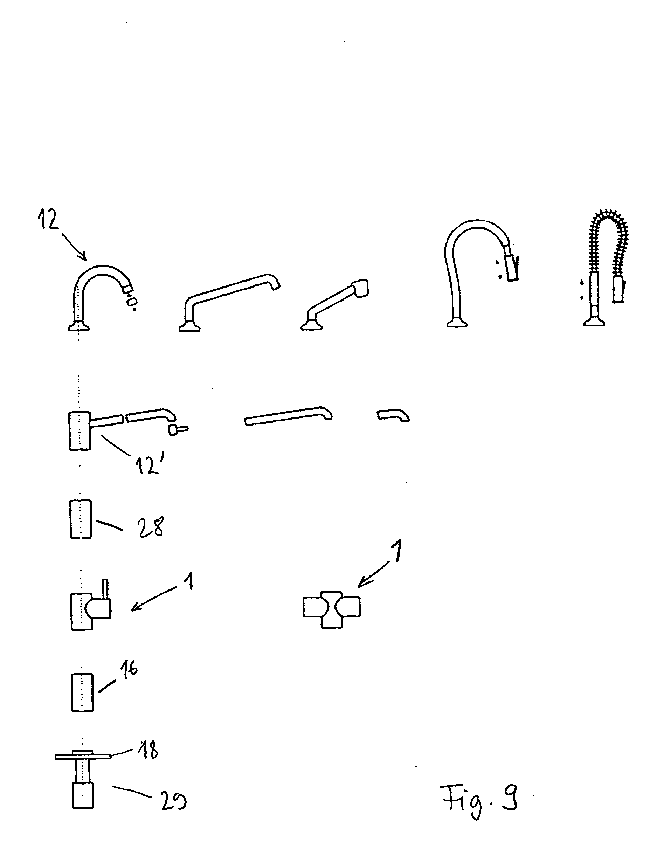

Fig. 1a-c, 2a-c, 3a-c zeigen ein erfindungsgemässes Armaturteil 1 von oben (Fig.1a, 2a, 3a), von unten (Fig. 1c, 2c, 3c) und im Schnitt entlang der Linie A-B-C (Fig. 1b, 3b) bzw. im Längsschnitt (Fig. 2b). Ein erster und ein zweiter Kanal 20, 21 für kaltes bzw. heisses Wasser verlaufen in einem ersten Kanalabschnitt 20' bzw. 21' parallel zur Längsachse L des Armaturteils 1 und in einem zweiten Kanalabschnitt 20'', 21" senkrecht dazu und münden im Seitenbereich des Armaturteils 1. Wie in den Fig. 4-7 dargestellt, ist an das Armaturteil 1 seitlich wenigstens ein Aufnahmeelement 5, 5' für ein Misch- und Dosierelement, z.B. eine Mischpatrone, angeformt. Im montierten Zustand münden die Kanäle 20, 21 in entsprechende Zuflusselemente des Misch- und Dosierelements. Die parallel zur Achse L verlaufenden Kanalabschnitte können auch bis zum oberen Ende des Armaturteils 1 durchgehen (hier nicht dargestellt). Ein dritter Kanal 3 verläuft durchgehend vom unteren zum oberen Ende und weist eine seitliche Abzweigung 6 auf, die im montierten Zustand ebenfalls mit dem Misch- und Dosierelement in Verbindung steht und zum Einlass von Mischwasser in den senkrechten Abschnitt des dritten Kanals 3 dient. Ein vierter zentraler Kanal 4 dient beispielsweise zur Aufnahme eines Schlauchs, vgl. Fig. 3a-c. Bei dem in Fig. 2a-c gezeigten Beispiel sind zusätzlich ein fünfter und ein sechster Kanal 22, 23 vorhanden, die vom Seitenbereich zum oberen Ende des Armaturteils 1 verlaufen. Diese dienen bei einer Zweihebelmischarmatur zum Wegleiten des dosierten, jedoch noch nicht gemischten Wassers, das oberhalb des Armaturteils gemischt wird, vgl. Fig. 5. Diese beiden Kanäle können auch bei den in den Fig. 1a-c und 3a-c gezeigten Varianten vorhanden sein, sind dort jedoch ohne Funktion.

Bei der Variante Fig. 1a-c ist der dritte Kanal 3 am unteren Ende 3b durch ein geeignetes Verschlusselement, z.B. durch das in Fig. 8 gezeigte scheibenförmige Dichtelement 2, verschlossen, so dass das Mischwasser nach oben durch die Öffnung 3a abfliesst. Diese Situation ist in Fig. 4 und 6 gezeigt. Der vierte Kanal 4 ist für die Wasserleitung ohne Funktion.

Bei der Variante Fig. 3a-c ist der dritte Kanal 3 am oberen Ende 3a durch ein geeignetes Verschlusselement, z.B. den in Fig. 7 gezeigten Auslaufeinsatz 7, verschlossen, so dass das Mischwasser nach unten durch die Öffnung 3b abfliesst und in einen Schlauch 19 geleitet wird. Diese Situation ist in Fig. 7 gezeigt. Der Schlauch 19 wird durch den vierten Kanal 4 zum Auslauf geführt.

Der Armaturteil 1 für eine Einhebelarmatur in den Varianten Fig. 1a-c und 3a-c ist identisch. Der Wasserfluss wird je nach der gewünschten Funktion durch geeignete Verschlusselemente festgelegt. Der Armaturteil für eine Zweihebelarmatur hat ebenfalls einen prinzipiell gleichen Aufbau mit dem Unterschied, dass der erste und zweite Kanal in unterschiedliche Misch- und Dosierelemente bzw. die entsprechenden Anformungen bzw. Ausnehmungen 5, 5' (vgl. Fig. 5) münden. Die Kanäle können im Inneren anders angeordnet sein.

Figur 4 zeigt einen Schnitt durch eine erfindungsgemässe Armatur mit einem Armaturteil 1, das seitlich ein Aufnahmeelement 5 für ein Misch- und Dosierelement aufweist, z.B. einen Einhebelmischer. Das Armaturteil 1 hat einen dritten Kanal 3 für Mischwasser, der parallel zur Achse L verläuft und eine seitliche, in die Ausnehmung des Aufnahmeelements 5 mündende Abzweigung 6 aufweist. Der erste und zweite Kanal zur Leitung von Warm- und Kaltwasser zur Ausnehmung bzw. zum Misch- und Dosierelement sind in der Abbildung nicht sichtbar. Konzentrisch zur Achse L befindet sich ein vierter Kanal 4, der in diesem Ausführungsbeispiel nicht zur Wasserleitung dient. Im Inneren des vierten Kanals befindet sich ein Innenrohr 14, das zur Befestigung der Armatur in der Montageposition und zur Befestigung eines oberhalb der oberen Öffnungen 3a, 4a der Kanäle 3, 4 angeordneten Auslaufeinsatzes 7 dient. Der Auslaufeinsatz 7 hat die Funktion, die nach oben weisenden Öffnungen vorhandener Kanäle in bestimmter Weise abzudichten oder freizugeben. Vorliegend wird die Öffnung 4a des vierten Kanals 4 geschlossen. Aus der oberen Öffnung 3a des dritten Kanals 3 austretendes Mischwasser wird durch den Auslaufeinsatz 7 durch darin bzw. in Verbindung mit der benachbarten Wandung 1a des im oberen Bereich becherförmigen Armaturteils 1 gebildete Kanäle 8, 9 zu einem zentrisch angeordneten Leitungselement 10 und schliesslich in den Auslauf 12 geleitet. Der dritte Kanal 3 ist nach unten durch ein scheibenförmiges Dichtelement 2 verschlossen, das ein mittiges Loch für das Innenrohr 14 aufweist. Dieses Dichtelement 2 dient ebenfalls dazu, die unteren Öffnungen der Kanäle freizugeben oder zu verschliessen, um den gewünschten Wasserfluss zu realisieren. Im Bereich der Öffnungen des ersten und zweiten Kanals hat das Dichtelement 2 ebenfalls Öffnungen.

Der obere Bereich des Armaturteils 1 ist becherförmig gestaltet und nimmt neben dem Auslaufeinsatz 7 das Leitunsgelement, ein Führungsteil 11, das untere Ende des Wasserauslaufes 12 und ein Abdeckteil 13 auf. Diese Teile sind konzentrisch angeordnet.

Fig. 5 zeigt einen Schnitt durch eine erfindungsgemässe Armatur mit einem Armaturteil 1, das seitlich zwei Ausnehmungen 5, 5' für ein Dosierelement aufweist, z.B. einen Zweihebelmischer. Der Wasserzulauf durch den ersten bzw. zweiten Kanal ist wiederum nicht dargestellt. Zwei Kanäle 3, 3' verlaufen parallel zur Achse L und haben eine Querverbindung 6, 6' zu den Ausnehmungen 5, 5'. Beide Kanäle 3, 3' sind durch ein Dichtelement 2 unten abgeschlossen, so dass das aus den Dosierelementen kommende warme bzw. kalte Wasser nach oben strömt. Durch einen wie in Fig. 7 gestalteten Auslaufeinsatz 7 wird das Wasser durch vertikal verlaufende Kanäle 8, 8' in einen gemeinsamen quer verlaufenden Kanal 9, der als Mischkammer fungiert, geleitet und dort vermischt. Mit Ausnahme des zweiten Aufnahmeelements 5' stimmt der Aufbau der Armatur mit Fig. 4 überein, so dass die gleichen Bauelemente genutzt werden können.

Fig. 6 zeigt einen Schnitt durch eine weitere Armatur in der Einbaulage. Der Armaturkörper 1 entspricht im wesentlichen Fig. 4 und weist einen ersten, zweiten, dritten und vierten Kanal auf, von denen nur der dritte und vierte Kanal 3, 4 sichtbar ist. Der dritte Kanal 3 ist unten durch das Dichtelement 2 verschlossen, so dass aus dem Misch- und Dosierelement über die Abzweigung 6 einlaufendes Mischwasser nach oben geleitet wird. Im Bereich der oberen Kanalöffnungen ist der Auslaufeinsatz 7 aufgesetzt, der hier die obere Öffnung 3a freigibt. Der Auslaufeinsatz 7 umfasst ein Verlängerungsrohr 15, das auch ein separates Teil sein kann und auf das Innenrohr 14 konzentrisch mit dem vierten Kanal 4 aufgesetzt ist. Zwischen dem Verlängerungsrohr 15 und den nach oben verlängerten Seitenteilen 7a des Auslaufeinsatzes 7 wird Wasser zum Wasserauslauf 12 geleitet. Die Armatur ist oben mit einem Abdeckteil 13' verschlossen.

Der Armaturteil 1 ist mit einem Sockel 16 verbunden, der im Montagefall auf einer Platte 18 befestigt ist. Ein Montagerohr 17 in der Verlängerung des Innenrohrs 14 bzw. vierten Kanals 4 ragt durch die Platte 18. Die Armatur wird befestigt, indem die Elemente ober- und unterhalb der Platte 18 gegeneinander verschraubt werden. Die Zuleitungen für Warm- und Kaltwasser werden mit dem Sockel 16 verbunden.

Anstelle des Verlängerungsrohrs 15 kann auch ein längeres Rohr eingesetzt werden, falls ein Wasserauslauf 12 mit vergrössertem Abstand zur Platte 18 realisiert werden soll. Wenn der dritte Kanal 3 auch unten freigegeben wird, kann eine Armatur mit zwei Wasserausläufen realisiert werden, indem das untere Ende mit einem Druckschlauch verbunden wird, der durch den vierten Kanal 4 und die anschliessenen Rohre nach oben geführt wird und ein Ventil am oberen Ende aufweist.

Fig. 7 zeigt einen Schnitt durch eine Armatur mit einem Schlauch 19, der aus dem Wasserauslauf 12 ausziehbar ist. Das Armaturteil 1 entspricht Fig. 4 bzw. 6. Die obere Öffnung 3a des dritten Kanals 3 ist durch den Auslaufeinsatz 7 verschlossen, die untere Öffnung ist frei und auf geeignete Weise mit einem hier nicht gezeigten Ende des Schlauchs 19 verbunden. Der Schlauch 19 ist im vierten Kanal 4 geführt. Der über diesem angeordnete Auslaufeinsatz 7 weist eine mittige Öffnung auf, durch die der Schlauch 19 in den Wasserauslauf 12 eintritt. Am unteren Ende des Armaturteils 1 kann wie in Fig. 4 oder 6 ein Dichtelement 2 angeordnet sein, das die entsprechenden Kanalöffnungen freilässt.

Fig. 8 zeigt ein Dichtelement 2, das prinzipiell für alle beschriebenen Ausführungsbeispiele einsetzbar ist. Das Dichtelement 2 besteht aus einer ringförmigen Scheibe mit einem kreisförmigen Loch 25 in der Mitte, durch das das Innenrohr 14 durchgeht. Auf der Scheibe befinden sich Bereiche 24, die im eingebauten Zustand den Kanalöffnungen im Armaturteil entsprechen. Diese Bereiche 24 sind von Dichtringen 26 umgeben. Soll eine Kanalöffnung verschlossen gehalten werden, ist der zugeordnete Bereich 24 mit dem Material der Scheibe ausgefüllt. Soll die Öffnung freigegeben werden, wird eine Scheibe mit einem Loch im entsprechenden Bereich 24 verwendet. Das Dichtelement 2 dient daher als Codierscheibe zur Festlegung der Flusswege des Wassers. Fortsätze 27 dienen zur richtigen Orientierung des Dichtelements 2 innerhalb des Armaturteils 1, das entsprechende Nuten aufweist, so dass das Dichtelement nur in einer einzigen Lage eingelegt werden kann. Das dargestellte Dichtelement ist für alle in den Fig. 1-3 gezeigten Varianten einsetzbar. Soll ein Dichtelement 2 nur für Einhebelmischarmaturen mit drei Kanälen verwendet werden, reicht es, drei Bereiche 24 vorzusehen.

Fig. 9 zeigt schematisch verschiedene Einzelkomponenten der erfindungsgemässen modularen Armatur. Neben dem erfindungsgemässen Armaturteil 1, gezeigt in der Einhebelund der Zweihebelvariante, umfasst eine montierte Armatur wenigstens einen Wasserauslauf 12, einen Sockel 16 und ein Basisteil 29, das sich unterhalb der Montageebene 18 befindet. Optional wird zwischen dem Wasserauslauf 12 und dem Armaturteil 1 ein Zwischenstück 28 angeordnet. Optional ist ein weiterer Wasserauslauf 12' vorhanden, der alternativ zum Wasserauslauf 12 benutzbar ist. In diesem Fall ist der dritte Kanal oben und unten offen. Die genannten Teile sind so gestaltet, dass sie mit oder ohne Zusatzoptionen wie Zwischenstück oder weiterer Wasserauslauf miteinander verschraubt werden können.

Die Wasserausläufe können unterschiedlich gestaltet sein, z.B. mit einem festen oder flexiblen Schwenkarm, mit einem ausziehbaren Schlauch, mit einem Ventil am Ort des Wasseraustritts und dergleichen.

## Patentansprüche

1. Armaturteil (1), geeignet zum Leiten von Wasser unterschiedlicher Temperatur von und/oder zu wenigstens einem Misch- und Dosierelement, wobei das Armaturteil (1) wenigstens drei Kanäle aufweist, wobei der erste und der zweite Kanal (20; 21) jeweils von einer im Bereich des unteren Endes des Armaturteils (1) angeordneten unteren Öffnung zu einer Öffnung seitlich am Armaturteil (1) verlaufen, **dadurch gekennzeichnet, dass** der dritte Kanal (3) von einer im Bereich des unteren Endes des Armaturteils (1) angeordneten unteren Öffnung (3b) zu einer im Bereich des oberen Endes des Armaturteils (1) angeordneten oberen Öffnung (3a) verläuft und wenigstens eine Abzweigung (6) mit einer seitlichen Öffnung aufweist.

2. Armaturteil (1) nach Anspruch 1, **dadurch gekennzeichnet, dass** das Armaturteil (1) eine im wesentlichen rotationssymmetrische Form hat, an die vorzugsweise wenigstens ein Aufnahmeelement (5, 5') für ein Misch- und Dosierelement angeformt ist.

3. Armaturteil (1) nach Anspruch 2, **dadurch gekennzeichnet, dass** der erste und der zweite Kanal (20; 21) jeweils einen parallel zur Achse des Armaturteils (1) verlaufenden ersten Kanalabschnitt (20'; 21') und einen senkrecht dazu verlaufenden zweiten Kanalabschnitt (20''; 21'')aufweisen und dass der dritte Kanal (3) mit Ausnahme der Abzweigung parallel zur Achse des Armaturteils (1) verläuft.

4. Armaturteil (1) nach Anspruch 2 oder 3, **dadurch gekennzeichnet, dass** ein durch das Armaturteil (1) durchgehender vierter Kanal (4) vorhanden ist, der konzentrisch zur Achse (L) des Armaturteils (1) verläuft.

5. Armaturteil (1) nach einem der Ansprüche 2 bis 4, **dadurch gekennzeichnet, dass** das Armaturteil (1) einen fünften und einen sechsten Kanal (22; 23) aufweist, der jeweils von einer im Bereich des oberen Endes des Armaturteils (1) angeordneten oberen Öffnung zu einer Öffnung seitlich am Armaturteil (1) verläuft.

6. Armaturteil (1) nach Anspruch 5, **dadurch gekennzeichnet, dass** der fünfte und sechste Kanal jeweils einen parallel zur Achse des Armaturteils (1) verlaufenden ersten Kanalabschnitt und einen senkrecht dazu verlaufenden zweiten Kanalabschnitt aufweisen.

7. Armaturteil (1) nach einem der vorangegangenen Ansprüche, **dadurch gekennzeichnet, dass** der erste und der zweite Kanal (20; 21) jeweils eine im Bereich des oberen Endes des Armaturteils (1) angeordnete weitere Öffnung aufweisen derart, dass ein vom unteren zum oberen Ende durchgehender Kanal mit jeweils einer seitliche Abzweigung gebildet wird.

8. Armatur mit Anschlüssen für eine Warmwasser- und eine Kaltwasserleitung, wenigstens einem Wasserauslauf (12, 12'), und wenigstens einem Misch- und/oder Dosierelement, **gekennzeichnet durch** ein Armaturteil (1) nach einem der vorangegangenen Ansprüche.

9. Armatur nach Anspruch 8, **gekennzeichnet durch** wenigstens ein Verschlusselement (2, 7), mit welchem die obere und/oder untere Öffnung des dritten Kanals (3) verschliessbar ist.

10. Armatur nach Anspruch 8 oder 9, **dadurch gekennzeichnet, dass** im Bereich des unteren Endes des Armaturteils (1) ein Dichtelement (2) und im Bereich des oberen Endes ein Auslaufeinsatz (7) angeordnet ist, wobei Dichtelement und Auslaufeinsatz so gestaltet sind, dass die untere Öffnung des dritten Kanals verschlossen und die obere Öffnung offen oder dass beiden Öffnungen offen oder verschlossen oder dass die untere Öffnung offen und die oberen Öffnung verschlossen ist.

11. Armatur nach Anspruch 10, **dadurch gekennzeichnet, dass** der Auslaufeinsatz Öffnungen weiterer Kanäle im Bereich des oberen Endes und dass das Dichtelement Öffnungen weiterer Kanäle im Bereich des unteren Endes des Armaturteils (1) verschliesst.

12. Armatur nach einem der Ansprüche 9 bis 11, **dadurch gekennzeichnet, dass** das Misch- und Dosierelement eine Mischpatrone ist und dass die seitlichen Öffnungen des ersten und zweiten Kanals mit dem Eingang der Mischpatrone und die seitliche Öffnung des dritten Kanals mit dem Ausgang der Mischpatrone in Verbindung stehen.

13. Armatur nach Anspruch 12, **dadurch gekennzeichnet, dass** die untere Öffnung des dritten Kanals verschlossen und die obere Öffnung des dritten Kanals offen ist, wobei der Auslaufeinsatz derart geformt ist, dass Wasser aus dem dritten Kanal in den Wasserauslauf geleitet wird.

14. Armatur nach Anspruch 12, **dadurch gekennzeichnet, dass** die untere Öffnung des dritten Kanals offen ist und mit einem flexiblen Schlauch (19) in Verbindung steht, und dass ein vierter Kanal vorhanden ist, durch den der Schlauch von unten nach oben zum Wasserauslauf geführt ist.

15. Armatur nach Anspruch 14, **dadurch gekennzeichnet, dass** obere Öffnung des dritten Kanals offen ist und den Austritt von Wasser durch den Auslaufeinsatz in den Wasserauslauf ermöglicht.

16. Armatur nach einem der Ansprüche 10 bis 15, **dadurch gekennzeichnet, dass** der Auslaufeinsatz eine Mischkammer ausbildet.

17. Armatur nach einem der Ansprüche 8 bis 16, **dadurch gekennzeichnet, dass** das Armaturteil (1) einen konzentrisch zur Achse verlaufenden vierten Kanal aufweist, in den ein Innenrohr (14) eingesetzt ist, das zur Montage der Armatur mit weiteren Bauteilen verschraubbar ist.

## Claims

1. A fitting part (1), suitable for conducting water of different temperature from and/or to at least one mixing and proportioning element, wherein the fitting part (1) has at least three ducts, the first and the second duct (20; 21) each running from a lower opening arranged in the region of the lower end of the fitting part (1) to an opening at the side on the fitting part (1), **characterized in that** the third duct (3) runs from a lower opening (3b) arranged in the region of the lower end of the fitting part (1) to an upper opening (3a) arranged in the region of the upper end of the fitting part (1) and has at least one branch (6) with a lateral opening.

2. The fitting part (1) as claimed in claim 1, wherein the fitting part (1) has an essentially rotationally symmetrical shape, on which preferably at least one receiving element (5, 5') for a mixing and proportioning element is formed.

3. The fitting part (1) as claimed in claim 2, wherein the first and the second duct (20; 21) each have a first duct portion (20'; 21') running parallel to the axis of the fitting part (1) and a second duct portion (20"; 21'') running at right angles thereto, and wherein the third duct (3), with the exception of the branch, runs parallel to the axis of the fitting part (1).

4. The fitting part (1) as claimed in claim 2 or 3, wherein a fourth duct (4) extending through the fitting part (1) is present, which runs concentrically with the axis (L) of the fitting part (1).

5. The fitting part (1) as claimed in one of claims 2 to 4, wherein the fitting part (1) has a fifth and a sixth duct (22; 23), each of which runs from an upper opening arranged in the region of the upper end of the fitting part (1) to an opening at the side on the fitting part (1).

6. The fitting part (1) as claimed in claim 5, wherein the fifth and sixth duct each have a first duct portion running parallel to the axis of the fitting part (1) and a second duct portion running at right angles thereto.

7. The fitting part (1) as claimed in one of the preceding claims, wherein the first and the second duct (20; 21) each have a further opening arranged in the region of the upper end of the fitting part (1), in such a way that a through-duct from the lower to the upper end, in each case with a lateral branch, is formed.

8. A fitting with connections for a hot-water and a cold-water pipe, at least one water outlet (12, 12'), and at least one mixing and/or proportioning element, which comprises a fitting part (1) as claimed in one of the preceding claims.

9. The fitting as claimed in claim 8, which comprises at least one closing element (2, 7), by which the upper and/or lower opening of the third duct (3) can be closed.

10. The fitting as claimed in claim 8 or 9, wherein a sealing element (2) is arranged in the region of the lower end of the fitting part (1) and an outlet insert (7) is arranged in the region of the upper end, the sealing element and the outlet insert being designed in such a way that the lower opening of the third duct is closed and the upper opening is open, or that both openings are open or closed, or that the lower opening is open and the upper opening is closed.

11. The fitting as claimed in claim 10, wherein the outlet insert closes openings of other ducts in the region of the upper end, and wherein the sealing element closes openings of other ducts in the region of the lower end of the fitting part (1).

12. The fitting as claimed in one of claims 9 to 11, wherein the mixing and proportioning element is a mixing cartridge, and wherein the lateral openings of the first and second duct communicate with the entry of the mixing cartridge and the lateral opening of the third duct communicates with the exit of the mixing cartridge.

13. The fitting as claimed in claim 12, wherein the lower opening of the third duct is closed and the upper opening of the third duct is open, the outlet insert being shaped in such a way that water is conducted from the third duct into the water outlet.

14. The fitting as claimed in claim 12, wherein the lower opening of the third duct is open and communicates with a flexible hose (19), and wherein a fourth duct is present, through which the hose is guided from the bottom to the top to the water outlet.

15. The fitting as claimed in claim 14, wherein the upper opening of the third duct is open and makes it possible for water to flow out through the outlet insert into the water outlet.

16. The fitting as claimed in one of claims 10 to 15, wherein the outlet insert forms a mixing chamber.

17. The fitting as claimed in one of claims 8 to 16, wherein the fitting part (1) has a fourth duct which runs concentrically with the axis and into which an inner tube (14) is inserted, which, for mounting the fitting, can be screwed together with other components.

## Revendications

1. Pièce de robinetterie (1) appropriée pour mener de l'eau de différente température depuis et/ou vers au moins un élément de mélange et de dosage, la pièce de robinetterie (1) présentant au moins trois canaux, le premier et le deuxième canal (20 ; 21) s'étendant chacun depuis une ouverture inférieure ménagée dans la zone de l'extrémité inférieure de la pièce de robinetterie (1) jusqu'à une ouverture latéralement sur la pièce de robinetterie (1), **caractérisée en ce que** le troisième canal (3) s'étend depuis une ouverture inférieure (3b) ménagée dans la zone de l'extrémité inférieure de la pièce de robinetterie (1) jusqu'à une ouverture supérieure (3a) ménagée dans la zone de l'extrémité supérieure de la pièce de robinetterie (1) et comprend au moins une ramification (6) avec une ouverture latérale.

2. Pièce de robinetterie (1) selon la revendication 1, **caractérisée en ce que** la pièce de robinetterie (1) présente une forme sensiblement à symétrie de révolution sur laquelle est conformée de préférence au moins un élément de réception (5, 5') pour un élément de mélange et de dosage.

3. Pièce de robinetterie (1) selon la revendication 2, **caractérisée en ce que** le premier et le deuxième canal (20 ; 21) comprennent chacun un premier tronçon de canal (20' ; 21') s'étendant parallèlement à l'axe de la pièce de robinetterie (1), et un deuxième tronçon de canal (20" ; 21") s'étendant perpendiculairement à celui-ci, et **en ce que** le troisième canal (3) s'étend parallèlement à l'axe de la pièce de robinetterie (1), exception faite de la ramification.

4. Pièce de robinetterie (1) selon l'une ou l'autre des revendications 2 et 3, **caractérisée en ce qu'**il est prévu un quatrième canal (4) qui traverse la pièce de robinetterie (1) et qui s'étend concentriquement à l'axe (L) de la pièce de robinetterie (1).

5. Pièce de robinetterie (1) selon l'une des revendications 2 à 4, **caractérisée en ce que** la pièce de robinetterie (1) présente un cinquième et un sixième canal (22 ; 23) qui s'étendent chacun depuis une ouverture supérieure ménagée dans la zone de l'extrémité supérieure de la pièce de robinetterie (1) jusqu'à une ouverture latéralement sur la pièce de robinetterie (1).

6. Pièce de robinetterie (1) selon la revendication 5, **caractérisée en ce que** le cinquième et le sixième canal comprennent chacun un premier tronçon de canal s'étendant parallèlement à l'axe de la pièce de robinetterie (1) et un deuxième tronçon de canal s'étendant perpendiculairement à celui-ci.

7. Pièce de robinetterie (1) selon l'une des revendications précédentes, **caractérisée en ce que** le premier et le deuxième canal (20 ; 21) présentent chacun une autre ouverture ménagée dans la zone de l'extrémité supérieure de la pièce de robinetterie (1), de telle sorte qu'un canal continu depuis l'extrémité inférieure vers l'extrémité supérieure est formé avec une ramification latérale respective.

8. Robinetterie comportant des raccords pour une conduite à eau chaude et pour une conduite à eau froide, au moins une sortie d'eau (12, 12') et au moins un élément de mélange et/ou de dosage, **caractérisée par** une pièce de robinetterie (1) selon l'une des revendications précédentes.

9. Robinetterie selon la revendication 8, **caractérisée par** au moins un élément d'obturation (2, 7) par lequel peut être refermée l'ouverture supérieure et/ou inférieure du troisième canal (3).

10. Robinetterie selon l'une ou l'autre des revendications 8 et 9, **caractérisée en ce que** dans la zone de l'extrémité inférieure de la pièce de robinetterie (1) est agencé un élément d'étanchéité (2) et dans la zone de l'extrémité supérieure est agencé un insert d'écoulement (7), l'élément d'étanchéité et l'insert d'écoulement étant réalisés de telle sorte que l'ouverture inférieure du troisième canal est refermée et l'ouverture supérieure est ouverte, ou bien que les deux ouvertures sont ouvertes ou refermées ou encore que l'ouverture inférieure est ouverte et l'ouverture supérieure est refermée.

11. Robinetterie selon la revendication 10, **caractérisée en ce que** l'insert d'écoulement referme des ouvertures d'autres canaux dans la zone de l'extrémité supérieure, et **en ce que** l'élément d'étanchéité referme des ouvertures d'autres canaux dans la zone de l'extrémité inférieure de la pièce de robinetterie (1).

12. Robinetterie selon l'une des revendications 9 à 11, **caractérisée en ce que** l'élément de mélange et de dosage est une cartouche de mélange, et **en ce que** les ouvertures latérales du premier et du deuxième canal sont en communication avec l'entrée de la cartouche de mélange, et l'ouverture latérale du troisième canal est en communication avec la sortie de la cartouche de mélange.

13. Robinetterie selon la revendication 12, **caractérisée en ce que** l'ouverture inférieure du troisième canal est refermée et l'ouverture supérieure du troisième canal est ouverte, l'insert d'écoulement étant formé de telle sorte que l'eau est amenée depuis le troisième canal jusque dans la sortie d'eau.

14. Robinetterie selon la revendication 12, **caractérisée en ce que** l'ouverture inférieure du troisième canal est ouverte et est en communication avec un tuyau flexible (19), et **en ce qu'**il est prévu un quatrième canal par lequel le tuyau est mené depuis le bas vers le haut jusqu'à la sortie d'eau.

15. Robinetterie selon la revendication 14, **caractérisée en ce que** l'ouverture supérieure du troisième canal est ouverte et permet l'écoulement de l'eau à travers l'insert d'écoulement jusque dans la sortie d'eau.

16. Robinetterie selon l'une des revendications 10 à 15, **caractérisée en ce que** l'insert d'écoulement forme une chambre de mélange.

17. Robinetterie selon l'une des revendications 8 à 16, **caractérisée en ce que** la pièce de robinetterie (1) présente un quatrième canal qui s'étend concentriquement à l'axe et dans lequel est mis en place un tube intérieur (14) qui peut être vissé avec d'autres composants pour monter la robinetterie.
